# EUROPÄISCHE PATENTSCHRIFT

(11) **EP 2 167 846 B1**
(45) Veröffentlichungstag und Bekanntmachung des Hinweises auf die Patenterteilung: **05.01.2011**
(21) Anmeldenummer: 08774696.2
(22) Anmeldetag: 03.07.2008
(51) Int. Cl.: F16H 63/48

(54) **VERFAHREN ZUR ANSTEUERUNG EINER FAHRSTUFE IN EINEM AUTOMATISCHEN ODER AUTOMATISIERTEN GETRIEBE EINES KRAFTFAHRZEUGS UND ENTSPRECHENDES KRAFTFAHRZEUG**
METHOD FOR ACTUATING A GEAR STEP IN AN AUTOMATIC OR AUTOMATED TRANSMISSION OF A MOTOR VEHICLE AND CORRESPONDING MOTOR VEHICLE
PROCEDE DE COMMANDE D'UNE PHASE DE FONCTIONNEMENT DANS UNE BOITE DE VITESSE AUTOMATIQUE OU AUTOMATISEE D'UN VEHICULE ET VEHICULE CORRESPONDANT

(30) Priorität: 19.07.2007 DE 102007033583; 29.08.2007 DE 102007040671
(43) Veröffentlichungstag der Anmeldung: 31.03.2010
(73) Patentinhaber: ZF Friedrichshafen AG, 88038 Friedrichshafen (DE)
(72) Erfinder: STEINHAUSER, Klaus, 88079 Kressbronn (DE); WORMS, Frank, 88085 Langenargen (DE); ZÄNGLEIN, Bernd, 88045 Friedrichshafen (DE); HECHT, Walter, 88214 Ravensburg (DE); KLEIN, Stéphane, 88046 Friedrichshafen (DE)
(86) Internationale Anmeldenummer: PCT/EP2008/058575
(87) Internationale Veröffentlichungsnummer: WO 2009/010395

(56) Entgegenhaltungen:
- EP-A- 0 814 287
- EP-A- 1 191 260
- JP-A- 2003 080 967
- US-A- 4 558 612
- US-A- 4 892 014

## Beschreibung

Die Erfindung betrifft ein Verfahren zur Ansteuerung einer Fahrstufe in einem automatischen oder automatisierten Getriebe eines Kraftfahrzeug, wobei die Fahrstufe des Getriebes und eine zum Festsetzen des Kraftfahrzeugs vorgesehene Parksperre abhängig von einer an einer vom Fahrer des Kraftfahrzeugs bedienbaren Wähleinrichtung gewählten Fahrstufe (P, R, N, D) und abhängig von anderen Betriebsparametern des Kraftfahrzeugs einlegbar ist, gemäß den Oberbegriffen der Patentansprüche 1 und 2. Weiterhin betrifft die Erfindung ein durch dieses Verfahren gesteuertes Kraftfahrzeug.

Bekannte automatische oder automatisierte Kraftfahrzeuggetriebe weisen in der Regel eine Parksperre auf, mit der eine Abtriebswelle des Getriebes mechanisch festsetzbar ist. Neben einem rein mechanischen System zum Betätigen einer derartigen Parksperre mittels einer mechanischen Wirkverbindung zwischen einem vom Fahrer bedienbaren Wählhebel im Innenraum des Kraftfahrzeugs und der Parksperre im Getriebe sind auch elektromechanische und elektrohydraulische Systeme zum Betätigen einer derartigen Parksperre bekannt - beispielsweise aus der DE 4127991 C2 - , bei denen die Parksperre im Getriebe über eine elektrische Wirkverbindung mit einer vom Fahrer bedienbaren Wähleinrichtung im Innenraum des Kraftfahrzeugs verbunden ist und bei denen die Parksperre mittels einer in einem elektronisches Steuergerät des Getriebes implementierten Parksperrenfunktion abhängig von einer an der Wähleinrichtung gewählten Fahrstufe und abhängig von anderen Betriebsparametern des Kraftfahrzeugs elektromechanisch bzw. elektrohydraulisch betätigbar ist.

Weiterhin sind verschiedene Verfahren zum automatischen Einlegen einer derartigen Parksperre bekannt. So wird in der US 3,937,105 vorgeschlagen, die Parksperre des Getriebes unabhängig von der vom Fahrer angewählten Fahrposition automatisch einzulegen, wenn ein Zündstromkreis des Kraftfahrzeugs unterbrochen ist und das Kraftfahrzeug gleichzeitig noch mit einer Geschwindigkeit kleiner einem definierten geringen Schwellwert rollt.

Aus der gattungsgemäßen US 4,892,014 ist ein Verfahren bekannt, bei dem die Parksperre des Getriebes zum einen automatisch elektromotorisch eingelegt wird, wenn ein Zündstromkreis des Kraftfahrzeugs unterbrochen ist und gleichzeitig die Fahrzeuggeschwindigkeit kleiner ist als ein definierter geringer Schwellwert, zum anderen aber auch, wenn die Fahrertür des Kraftfahrzeugs geöffnet ist und gleichzeitig der Fahrersitz des Kraftfahrzeugs unbelastet ist und gleichzeitig die Fahrzeuggeschwindigkeit kleiner ist als der genannte kleine Schwellwert. In beiden Fällen ist vorgesehen, dass beim automatischen Einlegen der Parksperre zusätzlich eine Parkbremse des Kraftfahrzeugs automatisch betätigt wird. In der US 4,892,014 wird auch vorgeschlagen, dass dann, wenn der Zündstromkreis geschlossen ist, ohne dass der Antriebsmotor des Kraftfahrzeugs läuft, das Getriebe automatisch elektromotorisch in seine Neutralstellung wechselt, wenn ein im Armaturenbrett vorgesehener separater Schalter betätigt ist.

Aus der EP 0 814 287 B1 schließlich ist eine Funktion zum automatischen Einlegen der Parksperre eines automatischen Getriebes bekannt, bei der die Parksperre im Automatikgetriebe durch die Getriebesteuereinrichtung automatisch eingelegt wird, wenn die Fahrgeschwindigkeit des Kraftfahrzeugs Null ist und gleichzeitig ein Zündstromkreis unterbrochen wurde und gleichzeitig als weitere Bedingung entweder eine vorbestimmte Zeitspanne nach dem Unterbrechen des Zündstromkreises verstrichen ist oder eine Fahrzeugtür geöffnet wird, spätestens jedoch, wenn - dann als einzige Bedingung - der Zündschlüssel aus dem Zündschloss entfernt ist. Um eine bessere Fahrzeugverfügbarkeit zu erzielen, wird als Besonderheit in allen drei Fällen das Einlegen der Parksperre verhindert, wenn der Fahrer direkt vor dem Abschalten des Motors oder innerhalb einer vorbestimmten Zeitspanne nach dem Abschalten des Motors die Fahrstufe Neutral mit dem Wählhebel angewählt hat.

Der vorliegenden Erfindung liegt die Aufgabe zugrunde, ein zum Stand der Technik alternatives Verfahren zur Ansteuerung einer Fahrstufe in einem automatischen oder automatisierten Getriebe eines Kraftfahrzeugs anzugeben, bei dem die Fahrstufe im Getriebe und eine zum Festsetzen des Kraftfahrzeugs vorgesehene Parksperre abhängig von einer an einer vom Fahrer des Kraftfahrzeugs bedienbaren Wähleinrichtung gewählten Fahrstufe und abhängig von anderen Betriebsparametern des Kraftfahrzeugs einlegbar ist, und bei dem in Betriebszuständen, in denen ein automatisches Einlegen der Parksperre infolge erkannter besonderer Betriebsparameter des Kraftfahrzeugs vorgesehen sein kann und/oder ein Einlegen der Parksperre systembedingt möglich ist, die Fahrbarkeit bzw. Bewegungsfähigkeit des Kraftfahrzeugs möglichst hoch ist.

Erfindungsgemäß gelöst wird diese Aufgabe durch ein Verfahren mit den Merkmalen des Patentanspruchs 1 und durch ein Verfahren mit den Merkmalen des Patentanspruchs 2. Vorteilhafte Ausgestaltungen und Weiterbildungen der Erfindung ergeben sich aus den Unteransprüchen. Ein erfindungsgemäßes Kraftfahrzeugs ist Gegenstand des unabhängigen Patentanspruchs 29.

Die Erfindung gemäß Patentanspruch 1 geht aus von einem Verfahren zur Ansteuerung einer Fahrstufe in einem automatischen oder automatisierten Getriebe eines Kraftfahrzeug, wobei die Fahrstufe des Getriebes und eine zum Festsetzen des Kraftfahrzeugs vorgesehene Parksperre abhängig von einer an einer vom Fahrer des Kraftfahrzeugs bedienbaren Wähleinrichtung gewählten Fahrstufe (P, R, N, D) und abhängig von anderen Betriebsparametern des Kraftfahrzeugs einlegbar ist.

Dabei ist mittels einer zusätzlich zur Wähleinrichtung vorgesehenen separaten Bedieneinrichtung unabhängig von einer mittels Wähleinrichtung vorgegeben Fahrstufe "Parken" (P) oder "Rückwärtsfahrt" (R) oder "Neutral" (N) oder "Vorwärtsfahrt" (D) eine Haltephase, in der sich das Getriebe in kraftschlussfreier Neutralstellung befindet, aktivierbar, wenn das Kraftfahrzeug zumindest annähernd steht und gleichzeitig ein auf einen Antriebsmotor des Kraftfahrzeugs wirkender Zündstromkreis elektrisch unterbrochen ist. Hierdurch ist es dem Fahrer möglich, das Kraftfahrzeug mit einfachen Bedienmitteln bewusst und schnell in einen Betriebszustand zu bringen, in dem das Kraftfahrzeug trotz stehendem Antriebsmotor rollbar ist, ohne dass er die aktuelle Stellung der zur Vorgabe der Fahrstufe (P, R, N, D) vorgesehenen Wähleinrichtung beachten muss. Solches ist beispielsweise sinnvoll, wenn der Fahrer das Kraftfahrzeug vor einer Fahrzeugwaschanlage gestoppt und den Antriebsmotor via Unterbrechung des auf den Antriebsmotor wirkenden Zündstromkreises abgestellt hat, und das Getriebe des Kraftfahrzeugs die Parksperre systembedingt - beispielsweise wegen nicht mehr vorhandenem Öldruck im Getriebe infolge einer nunmehr stillstehenden Ölpumpe - ohne Zusatzmaßnahmen automatisch einlegen würde.

Gemäß Patentanspruch 1 wird erfindungsgemäß vorgeschlagen, dass die zuvor aktivierte Haltephase automatisch beendet wird, wenn der aktuelle Ladezustand und/oder die aktuelle elektrische Spannung einer elektrischen Energiequelle des Kraftfahrzeugs, die zur Versorgung eines Steuergerätes des Getriebes und/oder zum Starten des Antriebsmotors vorgesehen ist, auf einen Wert unterhalb einer vordefinierten Entladeschwelle abgesunken ist. Durch diese Überwachung des aktuellen elektrischen Ladezustands oder der aktuellen elektrischen Spannung der Fahrzeugbatterie wird ein effizienter Schutz der Fahrzeugbatterie vor einer zu starken Entladung erzielt.

Gemäß Patentanspruch 2 wird erfindungsgemäß vorgeschlagen, dass die zuvor aktivierte Haltephase automatisch beendet wird, wenn die im Rahmen der erfindungsgemäßen Funktion der Fahrzeugbatterie bzw. der zur Versorgung des Getriebesteuergerätes und/oder zum Starten des Antriebsmotors vorgesehen elektrischen Energiequelle des Kraftfahrzeugs entnommene Energiemenge einem vordefinierten Schwellwert erreicht oder überschritten hat. Durch diese Überwachung derjenigen Energiemenge, die im Rahmen der erfindungsgemäßen Funktion der Fahrzeugbatterie bzw. der zur Versorgung des Getriebesteuergerätes und/oder zum Starten des Antriebsmotors vorgesehen elektrischen Energiequelle des Kraftfahrzeugs - insbesondere von dem Getriebesteuergerät - entnommen wurde, wird ein besonders effizienter Schutz der Fahrzeugbatterie vor einer zu starken Entladung erzielt. Eine derartige Energiemenge ist beispielsweise rechnerisch vergleichsweise einfach ermittelbar, indem die tatsächliche aktuelle Stromaufnahme des Getriebesteuergerätes über der Zeit aufintegriert wird oder indem das mathematische Produkt aus tatsächlicher aktueller Betriebsspannung und tatsächlicher aktueller Stromaufnahme des Getriebesteuergerätes über der Zeit aufintegriert wird.

Dabei können auch zusätzliche Kriterien bzw. Einstiegsbedingungen vorgesehen sein, die auch erfüllt sein müssen, um die Haltephase, in der sich das Getriebe in kraftschlussfreier Neutralstellung befindet, aktivieren zu können. So kann beispielsweise vorgesehen sein, dass zusätzlich zu den bereits genannten drei Einstiegsbedingungen "Kraftfahrzeug steht zumindest annähernd still", "auf den Antriebsmotor wirkender Zündstromkreis ist elektrisch unterbrochen" und "Fahrstufe Neutral (N) ist vorgegeben", die gleichzeitig erfüllt sein müssen, um die Haltphase, in der sich das Getriebe in kraftschlussfreier Neutralstellung befindet, mittels der separaten Bedieneinrichtung überhaupt aktivieren zu können, gleichzeitig eine weitere Bedingung "Kraftfahrzeug befindet sich in zumindest annähernd waagerechter Position" erfüllt sein muss, um die Haltphase aktivieren zu können.

Beispielsweise kann auch vorgesehen sein, dass zusätzlich zu den drei Einstiegsbedingungen "Kraftfahrzeug steht zumindest annähernd still", "auf den Antriebsmotor wirkender Zündstromkreis ist elektrisch unterbrochen" und "Fahrstufe Neutral (N) ist vorgegeben", die gleichzeitig erfüllt sein müssen, um die Haltphase, in der sich das Getriebe in kraftschlussfreier Neutralstellung befindet, mittels der separaten Bedieneinrichtung überhaupt aktivieren zu können, gleichzeitig eine weitere Bedingung "Zündschlüssel ist nicht aus einem dem Zündschlüssel zugeordneten mechanischen oder elektro-mechanischen Zündschloss entfernt oder befindet sich nicht außerhalb einer definierten Zone um ein dem Zündschlüssel zugeordnetes elektronisches Zündschloss des Kraftfahrzeugs herum" erfüllt sein muss, um die Haltphase aktivieren zu können.

Alle genannten Einstiegskriterien können auch in sinnvoller Art und Weise miteinander kombiniert werden. So kann beispielsweise vorgesehen sein, dass die Haltephase nur dann aktivierbar ist, WENN sich das Kraftfahrzeug in zumindest annähernd waagerechter Position befindet UND gleichzeitig eine ermittelte aktuelle Geschwindigkeit des Kraftfahrzeugs kleiner ist als ein vordefinierter kleiner Schwellwert UND gleichzeitig ein Zündschlüssel nicht aus einem dem Zündschlüssel zugeordneten mechanischen oder elektro-mechanischen Zündschloss entfernt ist oder sich nicht außerhalb einer definierten Zone um ein dem Zündschlüssel zugeordnetes elektronisches Zündschloss des Kraftfahrzeugs herum befindet. Hier sind also drei Einzelfunktionen mit jeweils eigener Funktionslogik über Bool'sche UND-Operatoren zu einer komplexen Gesamtfunktion verknüpft.

Zusätzlich oder alternativ kann auch vorgesehen sein, dass die Haltephase nur dann aktivierbar ist, wenn erkannt ist, dass der Fahrer das Kraftfahrzeug nicht verlassen will oder nicht verlässt. Auf diese Absicht oder Handlung des Fahrers kann beispielsweise geschlossen werden, wenn zumindest eines oder mehrere der folgenden beispielhaften Kriterien
- "eine Fahrertür des Kraftfahrzeugs ist geöffnet"
- "ein Fahrergurtschloss ist geöffnet"
- "eine Fahrersitzbelegungserkennung meldet einen unbesetzten Fahrersitz"
erfüllt ist, wobei es sinnvoll ist, zumindest zwei dieser Kriterien mittels "logischem UND" logisch miteinander zu verknüpfen.

Im Resultat wird durch die logische Verknüpfung dieser Einzelfunktionen mittels "logischem UND" eine hohe Fahrzeugverfügbarkeit erzielt bei gleichzeitig hoher Sicherheit für Fahrzeuginsassen und Umwelt gegen ungewolltes Wegrollen des Kraftfahrzeugs.

Zur Erhöhung der Sicherheit gegen ein versehentliches Entfernen des Zündschlüssel kann zusätzlich vorgesehen sein, dass dann, wenn die Haltephase aktiviert wird und/oder aktiviert ist, gleichzeitig eine Zündschloss-Sperre - auch bekannt als so genannter "key lock" - aktiviert wird und/oder aktiviert ist, welche verhindert, dass der mechanische Zündschlüssel aus seinem mechanischen bzw. elektro-mechanischen Zündschloss abgezogen wird bzw. dass der elektronische Zündschlüssel - beispielsweise in Art einer so genannter "ID-card" - zu weit von seinem elektronischen Zündschloss entfernt wird.

Weiterhin ist es sinnvoll, dass dann, wenn die Haltephase aktiviert wird und/oder aktiviert ist, gleichzeitig eine akustische und/oder optische Anzeige ausgelöst und/oder ausgegeben wird. Hierdurch wird der Fahrer gemahnt, dass er einen manuellen Eingriff vorgenommen hat bzw. dass ein das Festsetzen des Kraftfahrzeugs betreffender Eingriff vorgenommen wurde und das Kraftfahrzeug demzufolge rollen kann.

Hinsichtlich Deaktivierung der zuvor gezielt aktivierten Haltephase, in der sich das Getriebe in kraftschlussfreier Neutralstellung befindet, werden zwei Varianten vorgeschlagen. In der ersten dieser beiden Varianten wird vorgeschlagen, dass die zuvor aktivierte Haltephase mittels der separaten Bedieneinrichtung manuell vom Fahrer deaktivierbar ist.

In diesem Fall ist es sinnvoll, dass dann, wenn die zuvor aktivierte Haltephase manuell beendet wird, automatisch die Parksperre eingelegt und/oder automatisch eine fahrzeugseitige Parkbremse betätigt wird, unabhängig von der mittels Wähleinrichtung gewählten Fahrstufe, insbesondere dann, wenn sich der Fahrer nicht im Kraftfahrzeug befindet. Alternativ dazu kann vorgesehen sein, dass dann, wenn die zuvor aktivierte Haltephase manuell beendet wird, im Getriebe automatisch die mittels Wähleinrichtung gewählte Fahrstufe eingelegt wird, soweit systembedingt möglich.

In der zweiten Variante wird vorgeschlagen, dass die zuvor aktivierte Haltephase automatisch deaktivierbar ist. Wichtige Aspekte hierzu sind die Betriebssicherheit und die Ausfallsicherheit des Systems.

Entsprechend wird zur Erhöhung der Sicherheit bei sich verändernden Betriebsparametern vorgeschlagen, dass die zuvor aktivierte Haltephase automatisch beendet wird, wenn die aktuelle Geschwindigkeit des Kraftfahrzeugs größer ist als eine vordefinierte Geschwindigkeitsschwelle. Hierdurch wird sichergestellt, dass das Kraftfahrzeug nur innerhalb vorgegebener Grenzen rollbar ist. Dabei kann diese vordefinierte Geschwindigkeitsschwelle auch größer sein als der vordefinierte kleine Schwellwert der Fahrzeuggeschwindigkeit, der beim Aktivieren der Haltephase nicht überschritten sein darf.

Zur Erhöhung der Sicherheit bei sich verändernden Betriebsparametern kann auch vorgesehen sein, dass die zuvor aktivierte Haltephase automatisch beendet wird, wenn sich das Kraftfahrzeug nicht in zumindest annähernd waagerechter Position befindet.

Zur Erhöhung der Sicherheit gegen Unachtsamkeit des Fahrers und Missbrauch wird vorgeschlagen, dass die zuvor aktivierte Haltephase automatisch beendet wird, wenn der Zündschlüssel aus seinem mechanischen bzw. elektro-mechanischen Zündschloss entfernt ist oder sich außerhalb einer definierten Zone um sein elektronisches Zündschloss herum befindet.

Zur Erhöhung der Sicherheit gegen Unachtsamkeit des Fahrers kann auch vorgesehen sein, dass die zuvor aktivierte Haltephase automatisch beendet wird, erkannt ist, dass der Fahrer das Kraftfahrzeug verlassen will oder verlässt. Wie bereits zuvor erwähnt, kann auf diese Absicht oder Handlung des Fahrers geschlossen werden, wenn eines oder mehrere der folgenden beispielhaften Kriterien
- "eine Fahrertür des Kraftfahrzeugs ist geöffnet"
- "ein Fahrergurtschloss ist geöffnet"
- "eine Fahrersitzbelegungserkennung meldet einen unbesetzten Fahrersitz"
erfüllt sind.

Zur Erhöhung der Sicherheit gegen Unachtsamkeit des Fahrers kann auch vorgesehen sein, dass die zuvor aktivierte Haltephase automatisch beendet wird, wenn eine vordefinierte Zeitstufe abgelaufen ist. Diese Funktion hat zusätzlich den großen Vorteil, dass das elektrische Bordnetz des Kraftfahrzeugs durch das erfindungsgemäße Verfahren nicht zu stark belastet wird. In diesem Zusammenhang sei auf übliche Getriebekonstruktionen mit elektrohydraulisch betätigbarem Parksperrensystem hingewiesen, bei denen die Parksperre mittels hydraulischem Druck ausgelegt wird, mittels elektrisch bestromtem Elektromagnet im ausgelegten Zustand gehalten wird und bei fehlendem Hydraulikdruck und elektrisch abgeschaltetem Elektromagnet mittels Federkraft eingelegt wird. Insbesondere in Verbindung mit einem derartigen Getriebe kann durch diese vorgeschlagene vergleichsweise einfache funktionale Erweiterung verhindert werden, dass die Fahrzeugbatterie durch die elektrische Last insbesondere des Getriebesteuergerätes zu stark entladen wird. Die genannte Zeitstufe startet in sinnvoller Weise dann, wenn der Befehl zur Aktivierung der Haltephase erkannt ist oder spätestens dann, wenn sich das Getriebe auch tatsächlich in Neutralposition befindet.

Weiterhin wird aus Sicherheitsgründen vorgeschlagen, dass immer dann, wenn die zuvor aktivierte Haltephase automatisch beendet wird, automatisch die Parksperre eingelegt und/oder automatisch eine fahrzeugseitige Parkbremse betätigt wird, unabhängig von der mittels Wähleinrichtung gewählten Fahrstufe. Hierdurch wird sicher verhindert, dass das Getriebe versehentlich in eine derartige Schaltstellung gebracht wird, die bei einem Motorstart zum sofortigen Kraftschluss im Getriebe führen würde.

Bei Bedarf wird der Fachmann die vorgeschlagenen Ausgestaltungen zur automatischen Deaktivierung der Haltephase in sinnvoller Weise miteinander und bei Bedarf auch mit den Ausgestaltungen zur manuellen Deaktivierung oder Haltephase kombinieren.

Zur weiteren Erhöhung des Komforts wird in einer Weiterbildung der Erfindung vorgeschlagen, dass mittels der zur Aktivierung der Haltephase vorgesehenen separaten Bedieneinrichtung zusätzlich andere Aggregate des Kraftfahrzeugs ansteuerbar sind. So kann beispielsweise vorgesehen sein, dass mittels dieser separaten Bedieneinrichtung gleichzeitig mit oder zeitnah zu dem Aktivieren der Haltephase zusätzlich ein Befehl zum Schließen eines elektromotorisch betätigbaren Schiebedachs oder eines elektromotorisch oder elektrohydraulisch betätigbaren Falt- oder Klappverdecks und/oder elektromotorisch betätigbare Fenster des Kraftfahrzeugs ausgegeben wird.

Im Folgenden wird auf weitere Ausgestaltungen des erfindungsgemäßen Verfahrens näher eingegangen, die sich auf besondere Ausbildungen der separaten Bedieneinrichtung, die zumindest zum Aktivieren der Haltephase mit kraftschlussfreier Neutralstellung im Getriebe vorgesehenen ist, beziehen.

So kann beispielsweise vorgesehen sein, dass die separate Bedieneinrichtung zum Aktivieren und Deaktivieren der Haltephase als vom Fahrer bedienbarer Schalter ausgebildet ist. Entsprechend ist dann die Haltephase, in der sich das Getriebe in kraftschlussfreier Neutralposition befindet, durch manuelle Betätigung dieses Schalters durch den Fahrer aktivierbar und/oder deaktivierbar. Bauart und räumliche Anordnung eines derartigen Schalters im Innenraum des Kraftfahrzeugs sind dabei beliebig und liegen im Ermessen des Fachmanns. Ein Ausführungsbeispiel hierfür ist ein elektro-mechanischer Schalter, die in dem Zündschloss integriert ist, beispielsweise derart, dass die Haltephase aktiviert wird, indem der Zündstromkreis mittels Zündschloss elektrisch unterbrochen wird. Als ein anderes Ausführungsbeispiel sei ein elektro-mechanischer Schalter erwähnt, der als Teil der Wähleinrichtung ausgebildet bzw. in der Wähleinrichtung integriert ist.

Es kann beispielsweise aber auch vorgesehen sein, dass die separate Bedieneinrichtung zum Aktivieren und Deaktivieren der Haltephase als fernbedienbarer Schalter ausgebildet ist, der von außerhalb des Kraftfahrzeugs betätigbar ist. Entsprechend ist dann die Haltephase, in der sich das Getriebe in kraftschlussfreier Neutralposition befindet, durch Betätigung dieses fernbedienbaren Schalters von außerhalb des Kraftfahrzeugs her aktivierbar und/oder deaktivierbar. Hierbei kommen insbesondere Systeme mit einem außerhalb des Kraftfahrzeugs befindlichen (stationären oder mobilen) Sender in Betracht, um die Manövrierfähigkeit des Kraftfahrzeugs gezielt von außen beeinflussen zu können, beispielsweise mit einem Sender am Eingang einer Fahrzeugwaschanlage oder einem Sender in einer Werkstatt.

Weiterhin kann beispielsweise auch vorgesehen sein, dass die separate Bedieneinrichtung zum Aktivieren und Deaktivieren der Haltephase als Sensor ausgebildet ist, der Signale der Umgebung des Kraftfahrzeugs auswertet. Entsprechend ist dann die Haltephase, in der sich das Getriebe in kraftschlussfreier Neutralposition befindet, durch diesen Sensor aktivierbar und/oder deaktivierbar. Hierbei kommen insbesondere Sensoren zur Bilderfassung infrage, mit denen beispielsweise Hinweisschilder oder die Einfahrt einer Fahrzeugwaschanlage oder ein Bahnübergang in geeigneter Weise erkannt werden können, im Sinne einer Muster-Erkennung für vordefinierte Umweltbedingungen, bei denen die durch die Wähleinrichtung angewählte Fahrposition nicht zwangsweise die höchste Priorität dafür hat, welche Fahrstufe im Getriebe tatsächlich eingelegt wird.

Bei Bedarf wird der Fachmann die drei genannten Schaltervarianten "vom Fahrer bedienbarer Schalter", "fernbedienbarer Schalter" und "Sensor" in sinnvoller Weise miteinander kombinierbar sind.

Im Prinzip ist das erfindungsgemäße Verfahren für die Ansteuerung einer Parksperre beliebiger Bauart geeignet. Üblicherweise ist die Parksperre eines automatisch schaltenden oder automatisiert schaltenden Getriebes im Getriebe selber integriert. Üblicherweise ist auch das in bekannten Getrieben mechanisch, hydraulisch, pneumatisch, elektrisch, hydraulisch-mechanisch, pneumatisch-mechanisch, elektro-mechanisch, elektro-hydraulisch oder elektro-pneumatisch arbeitende Ansteuersystem der Parksperre im Getriebe integriert oder direkt außen am Getriebe angeordnet. Bei einem elektromechanisch, elektro-hydraulisch oder elektro-pneumatisch arbeitenden Ansteuersystem der Parksperre wird der auf die Parksperre wirkende Aktuator üblicherweise von einem Getriebesteuergerät aus angesteuert. Insofern ist es sinnvoll, alle Steuerfunktionen, die zur Umsetzung des Befehls, die erfindungsgemäße Haltephase mit kraftschlussfreier Neutralstellung des Getriebes im Getriebe zu aktivieren und wieder zu deaktivieren, benötigt werden, in dem Getriebesteuergerät zu integrieren, sodass das Getriebesteuergerät das Einlegen der Neutralstellung im Getriebe beim Aktivieren der Haltephase sowie das Einlegen der getriebeseitigen Parksperre und/oder Betätigen der kraftfahrzeugseitigen Parkbremse beim Deaktivieren der erfindungsgemäßen Haltephase initiiert.

Im Prinzip kann hierzu aber auch ein separates Steuergerät vorgesehen sein, welches dann in geeigneter Weise mit dem Getriebe und dessen Getriebesteuergerät kommuniziert. In jedem Fall bedarf es einer geeigneten Kommunikation zwischen der separaten Bedieneinrichtung und dem Getriebe bzw. Getriebesteuergerät Beispielsweise kann vorgesehen sein, dass das Einlegen der Neutralstellung im Getriebe beim Aktivieren der Haltephase sowie das Einlegen der getriebeseitigen Parksperre und/oder Betätigen der kraftfahrzeugseitigen Parkbremse beim Deaktivieren der Haltephase von einem Steuergerät der separaten Bedieneinrichtung des Kraftfahrzeugs initiiert wird.

Im Prinzip ist das erfindungsgemäße Verfahren auch für die Ansteuerung einer Parkbremse beliebiger Bauart geeignet. Üblicherweise ist eine Parkbremse integraler Bestandteil des fahrzeugseitigen Betriebsbremssystems und mechanisch oder elektrohydraulisch vom Fahrer bedienbar und soweit vorhanden auch von einem Bremsensteuergerät ansteuerbar. Bekannt sind aber auch autarke, d.h. von der Betriebsbremse des Kraftfahrzeugs unabhängige Systeme. In Verbindung mit einer Ansteuerung einer fahrzeugseitigen Parkbremse im Rahmen der Erfindung bedarf es in jedem Fall einer geeigneten Kommunikation zwischen der separaten Bedieneinrichtung und den anderen beiden beteiligten Komponenten "Parkbremse und Getriebe bzw. Bremssystem und Getriebesteuergerät.

Ein erfindungsgemäßes Kraftfahrzeug ist Gegenstand des unabhängigen Patentanspruchs 29. Das erfindungsgemäße Kraftfahrzeug weist ein automatisches oder automatisiertes Getriebe, eine vom Fahrer des Kraftfahrzeugs bedienbaren Wähleinrichtung zur Vorgabe einer Fahrstufe (P, R, N, D) des Getriebes, eine getriebeseitige Parksperre und/oder einer fahrzeugseitigen Parkbremse, ein Steuergerät zur Ansteuerung des Getriebes und/oder der Parkbremse abhängig von der an der Wähleinrichtung gewählten Fahrstufe (P, R, N, D) und abhängig von anderen Betriebsparametern des Kraftfahrzeugs, sowie eine zusätzliche separate Bedieneinrichtung zur manuellen Vorgabe einer Haltephase, in der sich das Getriebe in kraftschlussfreier Neutralstellung befindet, auf und wird gesteuert durch das zuvor beschriebene erfindungsgemäße Verfahren.

## Patentansprüche

1. Verfahren zur Ansteuerung einer Fahrstufe in einem automatischen oder automatisierten Getriebe eines Kraftfahrzeugs, wobei die Fahrstufe des Getriebes und eine zum Festsetzen des Kraftfahrzeugs vorgesehene Parksperre abhängig von einer an einer vom Fahrer des Kraftfahrzeugs bedienbaren Wähleinrichtung gewählten Fahrstufe (P, R, N, D) und abhängig von anderen Betriebsparametern des Kraftfahrzeugs einlegbar ist, wobei mittels einer zusätzlich zur Wähleinrichtung vorgesehenen separaten Bedieneinrichtung unabhängig von einer mittels Wähleinrichtung vorgegeben Fahrstufe "Parken" (P) oder "Rückwärtsfahrt" (R) oder "Neutral" (N) oder "Vorwärtsfahrt" (D) eine Haltephase, in der sich das Getriebe in kraftschlussfreier Neutralstellung befindet, aktivierbar ist, wenn das Kraftfahrzeug zumindest annähernd steht und gleichzeitig ein auf einen Antriebsmotor des Kraftfahrzeugs wirkender Zündstromkreis elektrisch unterbrochen ist, **dadurch gekenntzeichnet,** dass die zuvor aktivierte Haltephase automatisch deaktivierbar ist und automatisch beendet wird, wenn ein aktueller Ladezustand und/oder eine aktuelle elektrische Spannung einer elektrischen Energiequelle des Kraftfahrzeugs, die zur Versorgung eines Steuergerätes des Getriebes und/oder zum Starten des Antriebsmotors vorgesehen ist, auf einen Wert unterhalb einer vordefinierten Entladeschwelle abgesunken ist.

2. Verfahren zur Ansteuerung einer Fahrstufe in einem automatischen oder automatisierten Getriebe eines Kraftfahrzeugs, wobei die Fahrstufe des Getriebes und eine zum Festsetzen des Kraftfahrzeugs vorgesehene Parksperre abhängig von einer an einer vom Fahrer des Kraftfahrzeugs bedienbaren Wähleinrichtung gewählten Fahrstufe (P, R, N, D) und abhängig von anderen Betriebsparametern des Kraftfahrzeugs einlegbar ist, wobei mittels einer zusätzlich zur Wähleinrichtung vorgesehenen separaten Bedieneinrichtung unabhängig von einer mittels Wähleinrichtung vorgegeben Fahrstufe "Parken" (P) oder "Rückwärtsfahrt" (R) oder "Neutral" (N) oder "Vorwärtsfahrt" (D) eine Haltephase, in der sich das Getriebe in kraftschlussfreier Neutralstellung befindet, aktivierbar ist, wenn das Kraftfahrzeug zumindest annähernd steht und gleichzeitig ein auf einen Antriebsmotor des Kraftfahrzeugs wirkender Zündstromkreis elektrisch unterbrochen ist, **dadurch gekennzeichnet, dass** die zuvor aktivierte Haltephase automatisch deaktivierbar ist und automatisch beendet wird, wenn eine Energiemenge, die im Rahmen des Verfahrens der zur Versorgung eines Steuergerätes des Getriebes und/oder zum Starten des Antriebsmotors vorgesehenen elektrischen Energiequelle des Kraftfahrzeugs entnommen wurde, einen vordefinierten Schwellwert erreicht oder überschritten hat.

3. Verfahren nach Anspruch 2, **dadurch gekennzeichnet, dass** die Energiemenge ermittelt wird mittels mathematischer Integration der tatsächlichen Stromaufnahme des Steuergerätes über der Zeit oder mittels mathematischer Integration des Produkts aus tatsächlicher Betriebsspannung und tatsächlicher Stromaufnahme des Steuergerätes über der Zeit.

4. Verfahren nach Anspruch 1, 2 oder 3, **dadurch gekennzeichnet, dass** die Haltephase nur dann aktivierbar ist, wenn sich das Kraftfahrzeug in zumindest annähernd waagerechter Position befindet.

5. Verfahren nach einem der Ansprüche 1 bis 4, **dadurch geknnzeichnet,** dass die Haltephase nur dann aktivierbar ist, wenn ein Zündschlüssel nicht aus einem dem Zündschlüssel zugeordneten mechanischen oder elektro-mechanischen Zündschloss entfernt ist oder sich nicht außerhalb einer definierten Zone um ein dem Zündschlüssel zugeordnetes elektronisches Zündschloss des Kraftfahrzeugs herum befindet.

6. Verfahren nach einem der Ansprüche 1 bis 5, **dadurch gekennzeichnet, dass** die Haltephase nur dann aktivierbar ist, wenn erkannt ist, dass der Fahrer das Kraftfahrzeug nicht verlassen will oder nicht verlässt.

7. Verfahren nach einem der Ansprüche 1 bis 6, **dadurch gekennzeichnet, dass** die Haltephase nur dann aktivierbar ist, wenn eine ermittelte aktuelle Geschwindigkeit des Kraftfahrzeugs kleiner ist als ein vordefinierter kleiner Schwellwert.

8. Verfahren nach einem der Ansprüche 1 bis 7, **dadurch gekennzeichnet, dass** die zuvor aktivierte Haltephase mittels der separaten Bedieneinrichtung manuell vom Fahrer deaktivierbar ist.

9. Verfahren nach einem der Ansprüche 1 bis 8, **dadurch gekennzeichnet, dass** dann, wenn die zuvor aktivierte Haltephase manuell beendet wird, automatisch die Parksperre eingelegt und/oder automatisch eine fahrzeugseitige Parkbremse betätigt wird, unabhängig von der mittels Wähleinrichtung gewählten Fahrstufe, insbesondere dann, wenn sich der Fahrer nicht im Kraftfahrzeug befindet.

10. Verfahren nach einem der Ansprüche 1 bis 8, **dadurch gekennzeichnet, dass** dann, wenn die zuvor aktivierte Haltephase manuell beendet wird, im Getriebe automatisch die mittels Wähleinrichtung gewählte Fahrstufe eingelegt wird, soweit systembedingt möglich.

11. Verfahren nach einem der Ansprüche 1 bis 10, **dadurch gekennzeichnet, dass** die zuvor aktivierte Haltephase automatisch beendet wird, wenn der Zündschlüssel aus seinem mechanischen bzw. elektro-mechanischen Zündschloss entfernt ist oder sich außerhalb einer definierten Zone um sein elektronisches Zündschloss herum befindet.

12. Verfahren nach einem der Ansprüche 1 bis 11, **dadurch gekennzeichnet, dass** die zuvor aktivierte Haltephase automatisch beendet wird, wenn die aktuelle Geschwindigkeit des Kraftfahrzeugs größer ist als eine vordefinierte Geschwindigkeitsschwelle.

13. Verfahren nach Anspruch 12, **dadurch gekennzeichnet, dass** die vordefinierte Geschwindigkeitsschwelle größer ist als der vordefinierte kleine Schwellwert der Geschwindigkeit, der beim Aktivieren der Haltephase nicht überschritten sein darf.

14. Verfahren nach einem der Ansprüche 1 bis 13, **dadurch gekennzeichnet, dass** die zuvor aktivierte Haltephase automatisch beendet wird, wenn sich das Kraftfahrzeug nicht in zumindest annähernd waagerechter Position befindet.

15. Verfahren nach einem der Ansprüche 1 bis 14, **dadurch gekennzeichnet, dass** die zuvor aktivierte Haltephase automatisch beendet wird, erkannt ist, dass der Fahrer das Kraftfahrzeug verlassen will oder verlässt.

16. Verfahren nach einem der Ansprüche 1 bis 15, **dadurch gekennzeichnet, dass** die zuvor aktivierte Haltephase automatisch beendet wird, wenn eine vordefinierte Zeitstufe abgelaufen ist.

17. Verfahren nach einem der Ansprüche 1 bis 16, **dadurch gekennzeichnet, dass** dann, wenn die zuvor aktivierte Haltephase automatisch beendet wird, automatisch die Parksperre eingelegt und/oder automatisch eine fahrzeugseitige Parkbremse betätigt wird, unabhängig von der mittels Wähleinrichtung gewählten Fahrstufe.

18. Verfahren nach einem der Ansprüche 1 bis 17, **dadurch gekennzeichnet, dass** mittels der zur Aktivierung der Haltephase vorgesehenen separaten Bedieneinrichtung zusätzlich andere Aggregate des Kraftfahrzeugs ansteuerbar sind.

19. Verfahren nach Anspruch 18, **dadurch gekennzeichnet, dass** gleichzeitig mit oder zeitnah zu dem Aktivieren der Haltephase ein Befehl zum Schließen eines elektromotorisch betätigbaren Schiebedachs oder eines elektromotorisch oder elektrohydraulisch betätigbaren Falt- oder Klappverdecks und/oder elektromotorisch betätigbare Fenster des Kraftfahrzeugs ausgegeben wird.

20. Verfahren nach einem der Ansprüche 1 bis 19, **dadurch gekennzeichnet, dass** die Haltephase durch manuelle Betätigung eines Schalters durch den Fahrer aktivierbar und/oder deaktivierbar ist.

21. Verfahren nach Anspruch 20, **dadurch gekennzeichnet, dass** die Haltephase aktivierbar ist, indem der Zündstromkreis mittels Zündschloss elektrisch unterbrochen wird, wobei der Schalter zum Aktivieren und Deaktivieren der Haltephase in dem Zündschloss integriert ist.

22. Verfahren nach einem der Ansprüche 1 bis 21, **dadurch gekennzeichnet, dass** die Haltephase durch Betätigung eines fernbedienbaren Schalters von außerhalb des Kraftfahrzeugs her aktivierbar und/oder deaktivierbar ist.

23. Verfahren nach einem der Ansprüche 1 bis 22, **dadurch gekennzeichnet, dass** die Haltephase durch einen Sensor, der Signale der Umgebung des Kraftfahrzeugs auswertet, aktivierbar und/oder deaktivierbar ist.

24. Verfahren nach einem der Ansprüche 1 bis 23, **dadurch gekennzeichnet, dass** dann, wenn die Haltephase aktiviert wird und/oder aktiviert ist, gleichzeitig eine Zündschloss-Sperre (key lock) aktiviert wird und/oder aktiviert ist, welche verhindert, dass der mechanische Zündschlüssel aus seinem mechanischen bzw. elektro-mechanischen Zündschloss abgezogen wird bzw. dass der elektronische Zündschlüssel (ID-card) zu weit von seinem elektronischen Zündschloss entfernt wird.

25. Verfahren nach einem der Ansprüche 1 bis 24, **dadurch gekennzeichnet, dass** dann, wenn die Haltephase aktiviert wird und/oder aktiviert ist, gleichzeitig eine akustische und/oder optische Anzeige ausgelöst und/oder ausgegeben wird.

26. Verfahren nach Anspruch 6 oder 15, **dadurch gekennzeichnet, dass** dann, wenn eines oder mehrere der folgenden Kriterien
• "eine Fahrertür des Kraftfahrzeugs ist geöffnet"
• "ein Fahrergurtschloss ist geöffnet"
• "eine Fahrersitzbelegungserkennung meldet einen unbesetzten Fahrersitz"
erfüllt sind, erkannt wird, dass der Fahrer das Kraftfahrzeug verlassen will oder verlässt.

27. Verfahren nach einem der Ansprüche 1 bis 26, **dadurch gekennzeichnet, dass** das Einlegen der Neutralstellung im Getriebe beim Aktivieren der Haltephase sowie das Einlegen der getriebeseitigen Parksperre und/oder Betätigen der fahrzeugseitigen Parkbremse beim Deaktivieren der Haltephase von einem Steuergerät des Getriebes initiiert wird.

28. Verfahren nach einem der Ansprüche 1 bis 26, **dadurch gekennzeichnet, dass** das Einlegen der Neutralstellung im Getriebe beim Aktivieren der Haltephase sowie das Einlegen der getriebeseitigen Parksperre und/oder Betätigen der fahrzeugseitigen Parkbremse beim Deaktivieren der Haltephase von einem Steuergerät der separaten Bedieneinrichtung des Kraftfahrzeugs initiiert wird.

29. Kraftfahrzeug mit einem automatischen oder automatisierten Getriebe, mit einer vom Fahrer des Kraftfahrzeugs bedienbaren Wähleinrichtung zur Vorgabe einer Fahrstufe (P, R, N, D) des Getriebes, mit einer getriebeseitigen Parksperre und/oder einer fahrzeugseitigen Parkbremse, mit einem Steuergerät zur Ansteuerung des Getriebes und/oder der Parkbremse abhängig von der an der Wähleinrichtung gewählten Fahrstufe (P, R, N, D) und abhängig von anderen Betriebsparametern des Kraftfahrzeugs, sowie mit einer zusätzlichen separaten Bedieneinrichtung zur Vorgabe einer Haltephase, in der sich das Getriebe in kraftschlussfreier Neutralstellung befindet, **dadurch gekennzeichnet, dass** es durch ein Verfahren nach einem der Patentansprüche 1 bis 28, gesteuert wird.

30. Kraftfahrzeug nach Anspruch 29, **dadurch gekennzeichnet, dass** die separate Bedieneinrichtung zum Aktivieren und Deaktivieren der Haltephase als vom Fahrer bedienbarer Schalter ausgebildet ist.

31. Kraftfahrzeug nach Anspruch 30, **dadurch gekennzeichnet, dass** der Schalter zum Aktivieren und Deaktivieren der Haltephase in dem Zündschloss integriert ist.

32. Kraftfahrzeug nach Anspruch 30, **dadurch gekennzeichnet, dass** der Schalter als Teil der Wähleinrichtung ausgebildet ist bzw. in der Wähleinrichtung integriert ist.

33. Kraftfahrzeug nach einem der Ansprüche 29 bis 32, **dadurch gekennzeichnet, dass** die separate Bedieneinrichtung zum Aktivieren und Deaktivieren der Haltephase als fernbedienbarer Schalter ausgebildet ist, der von außerhalb des Kraftfahrzeugs betätigbar ist.

34. Kraftfahrzeug nach einem der Ansprüche 29 bis 33, **dadurch** g e - **kennzeichnet,** dass die separate Bedieneinrichtung zum Aktivieren und Deaktivieren der Haltephase als Sensor ausgebildet ist, der Signale der Umgebung des Kraftfahrzeugs auswertet.

## Claims

1. Method of controlling a gear step in an automatic or automated transmission of a motor vehicle, wherein the gear step of the transmission and a parking lock, which is provided for the purpose of immobilizing the motor vehicle, can be engaged as a function of a gear step (P, R, N, D) selected at a selector device that can be operated by the driver of the motor vehicle, and as a function of other operating parameters of the motor vehicle, and by means of a separate operating device, provided in addition to the selector device, a holding phase can be activated independently of a gear step specified by means of the selector device, namely "park" (P) or "reverse" (R) or "neutral" (N) or "drive" (D), in which holding phase the transmission is in a neutral position out of nonpositive engagement, if the motor vehicle is at least approximately at a standstill and, at the same time, an ignition circuit that acts on a drive engine of the motor vehicle is electrically interrupted, **characterized in that** the previously activated holding phase can be automatically deactivated and is automatically ended if a current state of charge and/or a current electrical voltage of an electrical energy source of the motor vehicle, which is provided for the purpose of supplying a transmission control device and/or of starting the drive engine, has fallen to a value lower than a predefined discharge threshold.

2. Method of actuating a gear step in an automatic or automated transmission of a motor vehicle, wherein the gear step of the transmission and a parking lock, which is provided for the purpose of immobilizing the motor vehicle, can be engaged as a function of a gear step (P, R, N, D) selected at a selector device that can be operated by the driver of the motor vehicle, and as a function of other operating parameters of the motor vehicle, and by means of a separate operating device, provided in addition to the selector device, a holding phase can be activated independently of a gear step specified by means of the selector device, namely "park" (P) or "reverse" (R) or "neutral" (N) or "drive" (D), in which holding phase the transmission is in a neutral position out of nonpositive engagement if the motor vehicle is at least approximately at a standstill and, at the same time, an ignition circuit that acts on a drive engine of the motor vehicle is electrically interrupted, **characterized in that** the previously activated holding phase can be automatically deactivated and is automatically ended if an amount of energy drawn in the course of the method from the electrical energy source of the motor vehicle, provided for the purpose of supplying a transmission control device and/or starting the drive motor, has reached or exceeded a predefined threshold value.

3. Method according to Claim 2, **characterized in that** the amount of energy is determined by mathematical integration of the actual power consumption of the control device over time or by means of mathematical integration of the product of an actual operating voltage and an actual power consumption of the control device over time.

4. Method according to Claim 1, 2 or 3, **characterized in that** the holding phase can be activated only when the motor vehicle is in an at least approximately horizontal position.

5. Method according to one of Claims 1 to 4, **characterized in that** the holding phase can be activated only when an ignition key has not been removed from a mechanical or electromechanical ignition lock, which is assigned to the ignition key, or the ignition key is not outside a defined zone around an electronic ignition lock of the motor vehicle which is assigned to the ignition key.

6. Method according to one of Claims 1 to 5, **characterized in that** the holding phase can be activated only upon detection that the driver does not intend to leave the motor vehicle or is not leaving the motor vehicle.

7. Method according to one of Claims 1 to 6, **characterized in that** the holding phase can be activated only when a determined current speed of the motor vehicle is lower than a predefined low threshold value.

8. Method according to one of Claims 1 to 7, **characterized in that** the previously activated holding phase can be deactivated manually by the driver by means of the separate operating device.

9. Method according to one of Claims 1 to 8, **characterized in that**, when the previously activated holding phase is ended manually, the parking lock is automatically engaged and/or a parking brake in the vehicle is automatically actuated, independently of the gear step selected by means of the selector device, in particular when the driver is not in the motor vehicle.

10. Method according to one of Claims 1 to 8, **characterized in that**, when the previously activated holding phase is ended manually, the gear step selected by means of the selector device is automatically engaged in the transmission, as far as is feasible within the constraints of the system.

11. Method according to one of Claims 1 to 10, **characterized in that** the previously activated holding phase is automatically ended if the ignition key is removed from its mechanical or electromechanical ignition lock or is outside a defined zone around its electronic ignition lock.

12. Method according to one of Claims 1 to 11, **characterized in that** the previously activated holding phase is automatically ended if the current speed of the motor vehicle is greater than a predefined speed threshold.

13. Method according to Claim 12, **characterized in that** the predefined speed threshold is higher than the predefined low threshold value of the speed that must not be exceeded during activation of the holding phase.

14. Method according to one of Claims 1 to 13, **characterized in that** the previously activated holding phase is automatically ended if the motor vehicle is not in an at least approximately horizontal position.

15. Method according to one of Claims 1 to 14, **characterized in that** the previously activated holding phase is automatically ended upon detection that the driver intends to leave the vehicle or is leaving the vehicle.

16. Method according to one of Claims 1 to 15, **characterized in that** the previously activated holding phase is automatically ended if a predefined timer stage has run out.

17. Method according to one of Claims 1 to 16, **characterized in that**, when the previously activated holding phase is automatically ended, the parking lock is automatically engaged and/or a parking brake in the vehicle is automatically actuated, independently of the gear step selected by means of the selector device.

18. Method according to one of Claims 1 to 17, **characterized in that** other units of the motor vehicle can additionally be controlled by means of the separate operating device provided for the purpose of activating the holding phase.

19. Method according to Claim 18, **characterized in that** a command to close a sliding roof that can be actuated by electric motor, or a folding or hinged roof that can be actuated by electric motor or electrohydraulically and/or motor vehicle windows that can be actuated by electric motor is output at the same time or nearly at the same time as the activation of the holding phase.

20. Method according to one of Claims 1 to 19, **characterized in that** the holding phase can be activated and/or deactivated by manual operation of a switch by the driver.

21. Method according to Claim 20, **characterized in that** the holding phase can be activated by electrically interrupting the ignition circuit by means of the ignition lock, the switch for activating and deactivating the holding phase being integrated in the ignition lock.

22. Method according to one of Claims 1 to 21, **characterized in that** the holding phase can be activated and/or deactivated by actuating a remote controlled switch from outside the motor vehicle.

23. Method according to one of Claims 1 to 22, **characterized in that** the holding phase can be activated and/or deactivated by a sensor that evaluates signals from the surroundings of the motor vehicle.

24. Method according to one of Claims 1 to 23, **characterized in that** a key lock is activated simultaneously with activation and/or after activation of the holding phase to prevent removal of the mechanical ignition key from its mechanical or electromechanical ignition lock or to prevent the electronic ignition key (ID card) being moved too far away from its electronic ignition lock.

25. Method according to one of Claims 1 to 24, **characterized in that** an acoustic and/or optical indicator is triggered and/or output simultaneously with activation and/or after activation of the holding phase.

26. Method according to Claim 6 or 15, **characterized in that** the fact that the driver intends to leave the motor vehicle or is leaving the motor vehicle is detected when one or more of the following criteria is satisfied:
• "a driver's door of the motor vehicle is open"
• "a driver's belt buckle is not fastened"
• "a driver's seat occupancy detection device reports an unoccupied driver's seat".

27. Method according to one of Claims 1 to 26, **characterized in that** the engagement of the neutral position in the transmission upon activation of the holding phase and the engagement of the parking lock in the transmission and/or the actuation of the parking brake in the vehicle upon deactivation of the holding phase is initiated by a transmission control device.

28. Method according to one of Claims 1 to 26, **characterized in that** the engagement of the neutral position in the transmission upon activation of the holding phase and the engagement of the parking lock in the transmission and/or the actuation of the parking brake in the vehicle upon deactivation of the holding phase is initiated by a control device of the separate operating device of the motor vehicle.

29. Motor vehicle having an automatic or automated transmission having a selector device, which can be operated by the driver of the motor vehicle, for specifying a gear step (P, R, N, D) of the transmission, having a parking lock in the transmission and/or a parking brake in the vehicle, having a control device for controlling the transmission and/or the parking brake as a function of the gear step (P, R, N, D) selected at the selector device and as a function of other operating parameters of the motor vehicle, and having an additional separate operating device for specifying a holding phase, in which the transmission is in a neutral position out of nonpositive engagement, **characterized in that** it is controlled by a method according to one of Patent Claims 1 to 28.

30. Motor vehicle according to Claim 29, **characterized in that** the separate operating device for activating and deactivating the holding phase is designed as a switch that can be operated by the driver.

31. Motor vehicle according to Claim 30, **characterized in that** the switch for activating and deactivating the holding phase is integrated in the ignition lock.

32. Motor vehicle according to Claim 30, **characterized in that** the switch is designed as part of the selector device or integrated in the selector device.

33. Motor vehicle according to one of Claims 29 to 32, **characterized in that** the separate operating device for activating and deactivating the holding phase is designed as a remote controlled switch that can be actuated from outside the motor vehicle.

34. Motor vehicle according to one of Claims 29 to 33, **characterized in that** the separate operating device for activating and deactivating the holding phase is designed as a sensor that evaluates signals from the surroundings of the motor vehicle.

## Revendications

1. Procédé de commande d'un rapport de conduite dans une boîte de vitesses automatique ou automatisée d'un véhicule automobile, dans lequel le rapport de conduite de la boîte de vitesses et un mécanisme de verrouillage de stationnement prévu pour immobiliser le véhicule automobile peuvent être enclenchés en fonction d'un rapport de conduite (P, R, N, D) sélectionné au niveau d'un dispositif de sélection pouvant être commandé par le conducteur du véhicule automobile, et en fonction d'autres paramètres de fonctionnement du véhicule automobile, une phase d'arrêt, dans laquelle la boîte de vitesses se trouve dans une position neutre exempte d'engagement par force, pouvant être activée au moyen d'un dispositif de commande séparé prévu en plus du dispositif de sélection, indépendamment d'un rapport de conduite prédéfini au moyen du dispositif de sélection, comme "stationnement" (P), "marche arrière" (R), "neutre" (N) ou "marche avant" (D), lorsque le véhicule automobile est au moins approximativement à l'arrêt et qu'un circuit d'allumage agissant sur un moteur d'entraînement du véhicule automobile est simultanément coupé, **caractérisé en ce que** la phase d'arrêt activée préalablement peut être désactivée automatiquement et est terminée automatiquement, lorsqu'un état de charge actuel et/ou une tension électrique actuelle d'une source d'énergie électrique du véhicule automobile, qui est prévue pour alimenter un appareil de commande de la boîte de vitesses et/ou pour faire démarrer le moteur d'entraînement, est/sont descendu(s) à une valeur en dessous d'un seuil de décharge prédéfini.

2. Procédé de commande d'un rapport de conduite dans une boîte de vitesses automatique ou automatisée d'un véhicule automobile, dans lequel le rapport de conduite de la boîte de vitesses et un mécanisme de verrouillage de stationnement prévu pour immobiliser le véhicule automobile peuvent être enclenchés en fonction d'un rapport de conduite (P, R, N, D) sélectionné au niveau d'un dispositif de sélection pouvant être commandé par le conducteur du véhicule automobile, et en fonction d'autres paramètres de fonctionnement du véhicule automobile, une phase d'arrêt, dans laquelle la boîte de vitesses se trouve dans une position neutre exempte d'engagement par force, pouvant être activée au moyen d'un dispositif de commande séparé prévu en plus du dispositif de sélection, indépendamment d'un rapport de conduite prédéfini au moyen du dispositif de sélection, comme "stationnement" (P), "marche arrière" (R), "neutre" (N) ou "marche avant" (D), lorsque le véhicule automobile est au moins approximativement à l'arrêt et qu'un circuit d'allumage agissant sur un moteur d'entraînement du véhicule automobile est simultanément coupé, **caractérisé en ce que** la phase d'arrêt activée préalablement peut être désactivée automatiquement et est terminée automatiquement, lorsqu'une quantité d'énergie, qui a été prélevée dans le cadre du procédé, de la source d'énergie électrique du véhicule automobile prévue pour l'alimentation d'un appareil de commande de la boîte de vitesses et/ou pour le démarrage du moteur d'entraînement, a atteint ou a dépassé une valeur seuil prédéfinie.

3. Procédé selon la revendication 2, **caractérisé en ce que** la quantité d'énergie est déterminée au moyen d'une intégration mathématique de la consommation effective de courant de l'appareil de commande en fonction du temps ou au moyen d'une intégration mathématique du produit de la tension de fonctionnement effective et de la consommation de courant effective de l'appareil de commande en fonction du temps.

4. Procédé selon la revendication 1, 2 ou 3, **caractérisé en ce que** la phase d'arrêt ne peut être activée que lorsque le véhicule automobile se trouve au moins approximativement en position horizontale.

5. Procédé selon l'une quelconque des revendications 1 à 4, **caractérisé en ce que** la phase d'arrêt ne peut être activée que si une clé d'allumage n'est pas retirée d'un interrupteur d'allumage mécanique ou électromécanique associé à la clé d'allumage ou si elle ne se trouve pas en dehors d'une zone définie autour d'un interrupteur d'allumage électronique du véhicule automobile associé à la clé d'allumage.

6. Procédé selon l'une quelconque des revendications 1 à 5, **caractérisé en ce que** la phase d'arrêt ne peut être activée que lorsque l'on a détecté que le conducteur ne veut pas quitter ou ne quitte pas le véhicule automobile.

7. Procédé selon l'une quelconque des revendications 1 à 6, **caractérisé en ce que** la phase d'arrêt ne peut être activée que si une vitesse actuelle déterminée du véhicule automobile est inférieure à une valeur seuil basse prédéfinie.

8. Procédé selon l'une quelconque des revendications 1 à 7, **caractérisé en ce que** la phase d'arrêt activée préalablement peut être désactivée manuellement par le conducteur au moyen du dispositif de commande séparé.

9. Procédé selon l'une quelconque des revendications 1 à 8, **caractérisé en ce que** lorsque la phase d'arrêt activée préalablement a été déconnectée manuellement, le mécanisme de verrouillage de stationnement est automatiquement enclenché et/ou un frein de stationnement du côté du véhicule est automatiquement actionné, indépendamment du rapport de conduite sélectionné au moyen du dispositif de sélection, notamment lorsque le conducteur ne se trouve pas dans le véhicule automobile.

10. Procédé selon l'une quelconque des revendications 1 à 8, **caractérisé en ce que** si la phase d'arrêt activée préalablement est terminée manuellement, le rapport de conduite sélectionné au moyen du dispositif de sélection est automatiquement enclenché dans la boîte de vitesses, dans la mesure du possible suivant le système.

11. Procédé selon l'une quelconque des revendications 1 à 10, **caractérisé en ce que** la phase d'arrêt activée préalablement est automatiquement terminée, lorsque la clé d'allumage est éloignée de son interrupteur d'allumage mécanique ou électromécanique ou qu'elle se trouve en dehors d'une zone définie autour de son interrupteur d'allumage électronique.

12. Procédé selon l'une quelconque des revendications 1 à 11, **caractérisé en ce que** la phase d'arrêt activée préalablement est terminée automatiquement lorsque la vitesse actuelle du véhicule automobile est supérieure à un seuil de vitesse prédéfini.

13. Procédé selon la revendication 12, **caractérisé en ce que** le seuil de vitesse prédéfini est supérieur à la valeur seuil basse prédéfinie de la vitesse, qui ne doit pas être dépassée lors de l'activation de la phase d'arrêt.

14. Procédé selon l'une quelconque des revendications 1 à 13, **caractérisé en ce que** la phase d'arrêt activée préalablement est terminée automatiquement lorsque le véhicule automobile ne se trouve pas dans une position au moins approximativement horizontale.

15. Procédé selon l'une quelconque des revendications 1 à 14, **caractérisé en ce que** la phase d'arrêt activée préalablement est terminée automatiquement si l'on détecte que le conducteur veut quitter ou quitte le véhicule automobile.

16. Procédé selon l'une quelconque des revendications 1 à 15, **caractérisé en ce que** la phase d'arrêt activée préalablement est terminée automatiquement lorsqu'un intervalle de temps prédéfini s'est écoulé.

17. Procédé selon l'une quelconque des revendications 1 à 16, **caractérisé en ce que** lorsque la phase d'arrêt activée préalablement est terminée automatiquement, le mécanisme de verrouillage de stationnement est automatiquement enclenché et/ou un frein de stationnement du côté du véhicule est automatiquement actionné, indépendamment du rapport de conduite sélectionné au moyen du dispositif de sélection.

18. Procédé selon l'une quelconque des revendications 1 à 17, **caractérisé en ce que** d'autres unités du véhicule automobile peuvent en outre être commandées au moyen du dispositif de commande séparé prévu pour l'activation de la phase d'arrêt.

19. Procédé selon la revendication 18, **caractérisé en ce qu'**un ordre de fermeture d'un toit ouvrant pouvant être actionné par un moteur électrique ou d'une capote pliante ou d'une capote escamotable pouvant être actionnée par un moteur électrique ou de manière électro hydraulique et/ou d'une fenêtre pouvant être actionnée par un moteur électrique du véhicule automobile est émis simultanément à ou presque en même temps que l'activation de la phase d'arrêt.

20. Procédé selon l'une quelconque des revendications 1 à 19, **caractérisé en ce que** la phase d'arrêt peut être activée et/ou désactivée par un actionnement manuel d'un commutateur par le conducteur.

21. Procédé selon la revendication 20, **caractérisé en ce que** la phase d'arrêt peut être activée en coupant électriquement le circuit de courant d'allumage au moyen de l'interrupteur d'allumage, le commutateur pour l'activation et la désactivation de la phase d'arrêt étant intégré dans l'interrupteur d'allumage.

22. Procédé selon l'une quelconque des revendications 1 à 21, **caractérisé en ce que** la phase d'arrêt peut être activée et/ou désactivée par actionnement d'un commutateur à commande à distance depuis l'extérieur du véhicule automobile.

23. Procédé selon l'une quelconque des revendications 1 à 22, **caractérisé en ce que** la phase d'arrêt peut être activée et/ou désactivée par un capteur qui analyse des signaux de l'environnement du véhicule automobile.

24. Procédé selon l'une quelconque des revendications 1 à 23, **caractérisé en ce que** lorsque la phase d'arrêt est activée ou va être activée, un mécanisme de verrouillage de l'interrupteur d'allumage (key lock) est simultanément activé et/ou va être activé simultanément et empêche que la clé d'allumage mécanique ne soit ressortie de son interrupteur d'allumage mécanique ou électromécanique ou que la clé d'allumage électronique (ID-card) ne soit trop éloignée de son interrupteur d'allumage électronique.

25. Procédé selon l'une quelconque des revendications 1 à 24, **caractérisé en ce que** lorsque la phase d'arrêt est activée et/ou va être activée, un indicateur acoustique et/ou optique est déclenché et/ou émis simultanément.

26. Procédé selon la revendication 6 ou 15, **caractérisé en ce que** lorsque l'un ou plusieurs des critères suivants sont satisfaits, on détecte que le conducteur veut quitter ou quitte le véhicule automobile :
• une portière de conducteur du véhicule automobile est ouverte
• un verrou de ceinture de sécurité du conducteur est ouvert
• une détection d'occupation du siège du conducteur indique que le siège du conducteur n'est pas occupé.

27. Procédé selon l'une quelconque des revendications 1 à 26, **caractérisé en ce que** l'enclenchement de la position neutre dans la boîte de vitesses lors de l'activation de la phase d'arrêt ainsi que l'enclenchement du mécanisme de verrouillage de stationnement du côté de la boîte de vitesses et/ou l'actionnement du frein de stationnement du côté du véhicule sont amorcés lors de la désactivation de la phase d'arrêt par un appareil de commande de la boîte de vitesses.

28. Procédé selon l'une quelconque des revendications 1 à 26, **caractérisé en ce que** l'enclenchement de la position neutre dans la boîte de vitesses lors de l'activation de la phase d'arrêt ainsi que l'enclenchement du mécanisme de verrouillage de stationnement du côté de la boîte de vitesses et/ou l'actionnement du frein de stationnement du côté du véhicule lors de la désactivation de la phase d'arrêt sont amorcés par un appareil de commande du dispositif de commande séparé du véhicule automobile.

29. Véhicule automobile comprenant une boîte de vitesses automatique ou automatisée, avec un dispositif de sélection pouvant être commandé par le conducteur du véhicule automobile pour prédéfinir un rapport de conduite (P, R, N, D) de la boîte de vitesses, avec un mécanisme de verrouillage de stationnement du côté de la boîte de vitesses et/ou un frein de stationnement du côté du véhicule, avec un appareil de commande pour commander la boîte de vitesses et/ou le frein de stationnement en fonction du rapport de conduite (P, R, N, D) sélectionné au niveau du dispositif de sélection et en fonction d'autres paramètres de fonctionnement du véhicule automobile, ainsi qu'avec un dispositif de commande supplémentaire séparé pour prédéfinir une phase d'arrêt, dans laquelle la boîte de vitesses se trouve dans une position neutre sans engagement par force, **caractérisé en ce qu'**il est commandé par un procédé selon l'une quelconque des revendications 1 à 28.

30. Véhicule automobile selon la revendication 29, **caractérisé en ce que** le dispositif de commande séparé pour l'activation et la désactivation de la phase d'arrêt est réalisé sous forme de commutateur pouvant être commandé par le conducteur.

31. Véhicule automobile selon la revendication 30, **caractérisé en ce que** le commutateur pour l'activation et la désactivation de la phase d'arrêt est intégré dans l'interrupteur d'allumage.

32. Véhicule automobile selon la revendication 30, **caractérisé en ce que** le commutateur est réalisé sous forme de partie du dispositif de sélection ou est intégré dans le dispositif de sélection.

33. Véhicule automobile selon l'une quelconque des revendications 29 à 32, **caractérisé en ce que** le dispositif de commande séparé pour l'activation et la désactivation de la phase d'arrêt est réalisé sous forme de commutateur à commande à distance, qui peut être actionné depuis l'extérieur du véhicule.

34. Véhicule automobile selon l'une quelconque des revendications 29 à 33, **caractérisé en ce que** le dispositif de commande séparé pour l'activation et la désactivation de la phase d'arrêt est réalisé sous forme de capteur qui analyse des signaux de l'environnement du véhicule automobile.
